Europäisches Patentamt

European Patent Office

Office européen des brevets

(11) Veröffentlichungsnummer: **0 251 202**
**A2**

(12) **EUROPÄISCHE PATENTANMELDUNG**

(21) Anmeldenummer: 87109125.2

(51) Int. Cl.⁴: **B23Q 3/06**

(22) Anmeldetag: 25.06.87

(30) Priorität: 27.06.86 DE 3621604

(43) Veröffentlichungstag der Anmeldung:
07.01.88 Patentblatt 88/01

(84) Benannte Vertragsstaaten:
AT CH DE FR GB IT LI SE

(71) Anmelder: Alfing Kessler Sondermaschinen
GmbH
Auguste-Kessler-Strasse Postfach 31 20
D-7080 Aalen-1(DE)

(72) Erfinder: Hannig, Helmut
Heidstrasse 1
D-7095 Rainau-Buch(DE)

(74) Vertreter: Kohlmann, Karl Friedrich et al
Hoffmann, Eitle & Partner Arabellastrasse 4
(Sternhaus)
D-8000 München 81(DE)

(54) **Spannvorrichtung.**

(57) Um eine insbesondere für größere Bearbeitungsanlagen geeignete, vollkommen neuartige Spannvorrichtung zu schaffen, die ein exaktes und sicheres Spannen der durch die Paletten in die Bearbeitungsstation geförderten Werkstücke mit geringem technischen Aufwand ermöglicht, werden erfindungsgemäß die Paletten (4) als Spannpratzen ausgebildet und in der Spannvorrichtung eine Hubeinrichtung (21) angeordnet sowie eine feste oder auswechselbare Spannanlage (16,17) vorgesehen, gegen die die Werkstücke (14) über die Paletten (4) mittels der Hubeinrichtung (21) spannbar sind.

Fig.1

## Spannvorrichtung

Die Erfindung betrifft eine Spannvorrichtung für auf Paletten einer Transfermaschine gehalterten Werkstücken zum Festspannen der Werkstücke in einer Bearbeitungsstation, zu der die Werkstücke mittels einer Taktvorrichtung auf den Paletten transportierbar sind.

Vorrichtungen dieser Art sind in unterschiedlichster Ausführung bekannt, wobei ihr überwiegend gemeinsames Merkmal die Anwendung der Paletten zum Transportieren der Werkstücke ist. Die Vorteile derartiger Paletten sind als hinreichend bekannt anzusehen, so daß sie nicht weiter beschrieben werden müssen. Beispiele für diese Art des Werkstücktransportes sind der DE-OS 34 16 858, der DE-PS 29 40 517 sowie der DE-OS 31 33 588 zu entnehmen. Eine Übersicht über dieses Fachgebiet ist der Zeitschrift "Flexible Automation" 4/85, Seiten 22-24, Werkstückpalette für automatische Fertigung zu entnehmen. Allen Schriften gemeinsam ist die Anwendung der Paletten als reines Trnasportmittel für die Werkstücke. Zur Bearbeitung der Werkstücke ist es also erforderlich, diese durch geeignete Mittel den Paletten zu entnehmen, zu fixieren und zu spannen.

Es bedarf somit besonderer, auf die Werkstückform abgestimmter Greifeinrichtungen, um die Werkstücke den Paletten zu entnehmen, sowie besonderer Fixier-und Spanneinrichtungen in jedem Verfahrensfall in werkstückgebundener Ausführung.

Es ist auch bekannt, Paletten in der Art zu verwenden, daß die Werkstücke auf diesen mit geeigneten Mitteln fixiert und gespannt werden können, wie dies der DE-OS 34 16 858 zu entnehmen ist. In der Bearbeitungsstation müssen jedoch dann die Paletten fixiert und gespannt werden, wodurch sich Fixierfehler addieren können, die den Einsatz dieses Prinzips zumindest bei hohen Anforderungen an die Genauigkeit in Frage stellen. Auch ist der technische Aufwand für das Aufspannen des Werkstückes auf der Palette und das Aufspannen der Palette in der jeweiligen Bearbeitungsstation relativ groß.

Aufgabe der vorliegenden Erfindung ist es, eine insbesondere für größere Bearbeitungsanlagen geeignete, vollkommen neuartige Spannvorrichtung zu schaffen, die ein exaktes und sicheres Spannen der durch die Paletten in die Bearbeitungsstation geförderten Werkstücke mit geringem technischen Aufwand ermöglicht.

Diese Aufgabe wird erfindungsgemäß dadurch gelöst, daß die Paletten als Spannpratzen ausgebildet sind, und daß in der Spannvorrichtung eine Hubeinrichtung angeordnet ist, und daß eine feste oder auswechselbare Spannanlage vorgesehen ist, gegen die die Werkstücke über die Paletten mittels der Hubeinrichtung spannbar sind.

Durch die erfindungsgemäßen Maßnahmen ist eine Spannvorrichtung geschaffen, die sich aufgrund des geringen technischen Aufwandes kostengünstig herstellen läßt und deshalb erhebliche Einsparungsmöglichkeiten eröffnet.

Vorteilhafte Weiterbildungen der Erfindung ergeben sich aus den Ansprüchen 2 bis 7.

Im folgenden ist eine Ausführungsform der erfindungsgemäßen Vorrichtung unter Bezugnahme auf die beigefügten Figuren näher beschrieben:

Es zeigen:

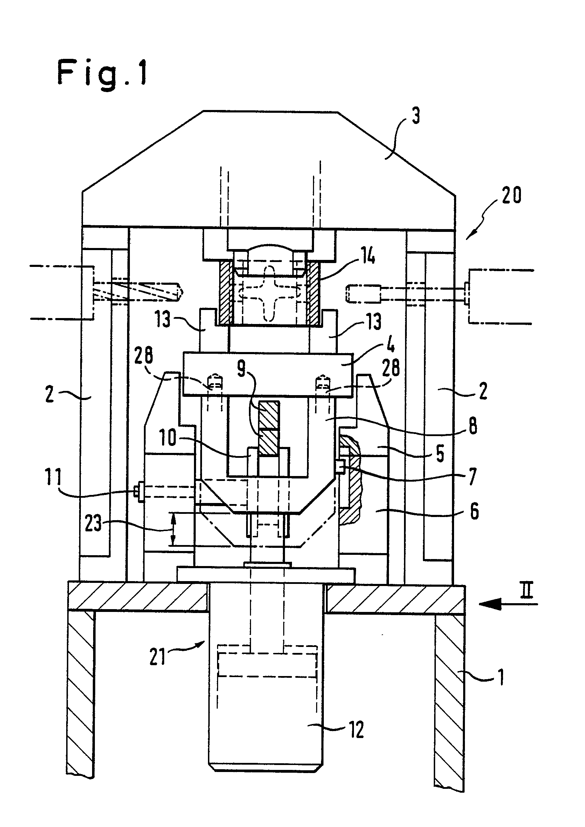

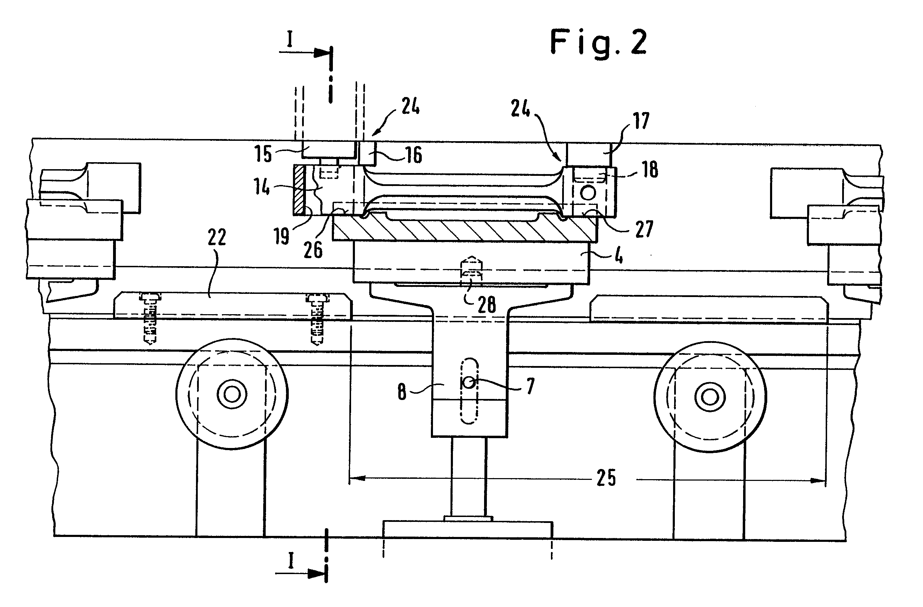

Fig. 1 eine Ansicht in Richtung I-I von Figur 2,

Fig. 2 eine Seitenansicht von Fig. 1 in Richtung II.

Auf einem Maschinenbett 1 ist auf Stützen 2 eine Brücke 3 befestigt, die Anlagen 16 und 17 für ein Werkstück 14 trägt, wobei in der Anlage 17 gleichzeitig ein fester (meist auswechselbarer) Fixierstift 18 zur Aufnahme des Werkstückes (im vorliegenden Ausführungsbeispiel eines mit zwei Pleuelbohrungen ausgestatteten Pleuels) angebracht ist. Die zweite Fixierung erfolgt in der zweiten Pleuelbohrung 19 durch einen Fixierstift 15. Soll die zweite Pleuelbohrung 19 bearbeitet werden, so muß die Fixierung 15 zurückziehbar ausgeführt sein, um den Einsatz des Bearbeitungswerkzeuges zu ermöglichen.

Eine Palette 4 ist zur Aufnahme des Werkstückes 14 mit Aufnahmen 13 versehen, die das Werkstück 14 beim Transport ausreichend festhalten. Die Aufnahmen 13 sind derart gestaltet und bemessen, daß sie dem Werkstück 14 genügend Spiel verleihen, um von der Positioniereinrichtung 24 aufgenommen zu werden. Zu diesem Zweck werden die Paletten 4 soweit angehoben (Hub 23), daß sie aus einer Taktvorrichtung 9 herausgenommen werden, und diese ohne Paletten einen Rückhub (25) fahren kann.

Die Paletten 4 sind derart kräftig ausgebildet, daß sie als Spannpratze die Spannkräfte ohne - schädliche Verbiegung übertragen können. Die Paletten 4 gleiten im Transportfalle auf einer Gleitbahn 5, die auf Stützen 6 in gewissen Abständen auf dem Maschinenbett 1 befestigt ist. Die Taktvorrichtung 9, die mit Positionierelementen 22 versehen ist, um die Paletten 4 auf der Gleitbahn 5 zu transportieren, wird von nicht dargestellten Elementen, wie Hydraulikzylindern oder Getrieben betätigt, deren Ausführung und Wirkung dem Fachmann bekannt sind.

Zur Abstützung ist die Taktvorrichtung 9 in Rollen 10 oder ähnlichen Gleiteinrichtungen gelagert, die mit Lagerbolzen 11 in den Stützen 6 gehalten sind. Zur Übertragung des Spannhubes (23) sind Gabeln 8 vorgesehen, die derart ausgebildet sind, daß ein Kippen der angehobenen Palette 4 mit dem darauf befindlichen Werkstück 14 nicht stattfinden kann. Zur Fixierung in der Palette 4 dienen zwei Stifte 28. Nicht dargestellt sind ferner Einrichtungen, die ein Nichteingreifen der Stifte 28 im automatischen Ablauf verhindern und Störungen vermeiden. Das gleiche gilt für den Abhub der Einrichtung 21, in der Weise, daß ein Hängenbleiben der Palette 4 mit dem Werkstück 14 durch Verklemmen an der Spannanlage 16,17 und in den Fixiereinrichtungen 24 mit dem Fachmann bekannten geeigneten Mitteln vermieden wird.

**Ansprüche**

1. Spannvorrichtung für auf Paletten einer Transfermaschine gehalterten Werkstücken zum Festspannen der Werkstücke in einer Bearbeitungsstation, zu der die Werkstücke mittels einer Taktvorrichtung auf den Paletten transportierbar sind,
dadurch gekennzeichnet, daß die Paletten (4) als Spannpratzen ausgebildet sind, und daß in der Spannvorrichtung (20) eine Hubeinrichtung (21) angeordnet ist, und daß eine feste oder auswechselbare Spannanlage (16,17) vorgesehen ist, gegen die die Werkstücke (14) über die Paletten (4) mittels der Hubeinrichtung (21) spannbar sind.

2. Vorrichtung nach Anspruch 1,
dadurch gekennzeichnet, daß die Paletten (4) auf einer Taktvorrichtung (9) in bezug auf die Spannvorrichtung (20) durch Positionierelemente (22) auswechselbar ausgerichtet gehalten sind.

3. Vorrichtung nach Anspruch 1,
dadurch gekennzeichnet, daß die Paletten (4) mit Aufnahmen (13) für die Werkstücke (14) versehen sind, die die Werkstücke (14) beim Transport festhalten.

4. Vorrichtung nach Anspruch 2,
dadurch gekennzeichnet, daß die Positionierelemente (22) vorteilhafterweise aus aufgeschraubten Mitnehmern bestehen, und daß die Paletten (4) durch ihr Eigengewicht auf der Taktvorrichtung (9) gehalten werden, wobei die Taktvorrichtung (9) in diesem Bereich aus einer zumindest unrunden Stange oder zwei rund oder unrund gestalteten Stangen besteht, die zur Ausführung des Takthubes (25) in Rollen-oder Gleitführungen (10) gehalten sind.

5. Vorrichtung nach Anspruch 3,
dadurch gekennzeichnet, daß die Aufnahmen (13) mit Auflagen (26,27) versehen sind, die die Werkstücke (14) unter Vermeidung von Verwindungen genau gegenüber Anlagepunkten in den Spannanlagen (16,17) spannen.

6. Vorrichtung nach Anspruch 1,
dadurch gekennzeichnet, daß die Hubeinrichtung (21) elektrisch, pneumatisch oder hydraulisch betätigbar und unterhalb, oberhalb oder seitlich der Takteinrichtung (9) angeordnet ist und aus handelsüblichen Zylinder-oder Getriebeelementen besteht, und über Gabeln (8) die Paletten (4) von der Takteinrichtung (9) abhebt, spannt und nach der Bearbeitung wieder auf die Takteinrichtung (9) und die Gleitbahn (5) aufsetzt.

7. Vorrichtung nach Anspruch 1,
dadurch gekennzeichnet, daß in der Spannvorrichtung (20) Fixiereinrichtungen (15, 18) angeordnet sind, die die Werkstücke (14) auf der Spannanlage (16,17) ausrichten und entsprechend der Bearbeitung fest oder zurückziehbar ausgebildet sind.

# Fig.1

# Fig. 2

0 251 202